Europäisches Patentamt

European Patent Office

Office européen des brevets

(19)

(11) Veröffentlichungsnummer : **0 123 201**
**B1**

(12) **EUROPÄISCHE PATENTSCHRIFT**

(45) Veröffentlichungstag der Patentschrift :
15.03.89

(21) Anmeldenummer : 84104002.5

(22) Anmeldetag : 10.04.84

(51) Int. Cl.⁴ : **H 01 M 12/06**

(54) **Luftsauerstoffzelle.**

(30) Priorität : 22.04.83 DE 3314624

(43) Veröffentlichungstag der Anmeldung :
**31.10.84 Patentblatt 84/44**

(45) Bekanntmachung des Hinweises auf die Patenterteilung : 15.03.89 Patentblatt 89/11

(84) Benannte Vertragsstaaten :
**BE CH DE FR GB IT LI NL**

(56) Entgegenhaltungen :
DE–A– 2 043 451
FR–A– 2 425 156
GB–A– 2 109 622
US–A– 3 897 265
PATENTS ABSTRACTS OF JAPAN, Band 7, Nr. 144 (E-
183)[1289], 23. Juni 1983; & JP-A-58 57 274 (TOSHIBA
DENCHI K.K.) 05-04-1983

(73) Patentinhaber : VARTA Batterie Aktiengesellschaft
Am Leineufer 51
D-3000 Hannover 21 (DE)

(72) Erfinder : Sauer, Hans
Pflasterwiese 7
D-6270 Idstein (DE)

(74) Vertreter : Kaiser, Dieter Ralf, Dipl.-Ing.
Gundelhardtstrasse 72
D-6233 Kelkheim/Ts. (DE)

## Beschreibung

Die Erfindung betrifft eine Luftsauerstoffzelle in Knopfform, bestehend aus einem den Elektrolyten und das negative Elektrodenmaterial aufnehmenden inneren Metallbecher und einem eine mehrschichtige positive Luftsauerstoffelektrode enthaltenden äußeren Metallbecher, die unter Zwischenlage einer isolierenden Dichtung zusammengefügt sind, wobei aus dem Boden des äußeren Metallbechers eine nach innen weisende konzentrische Sicke ausgeformt und die mehrschichtige positive Luftsauerstoffelektrode zwischen der Sicke und einem Dichtungsfuß fest eingespannt ist.

Bei der Montage derartiger Knopfzellen bereitet der Einbau der Luftelektrode Schwierigkeiten, weil sie ein sehr dünnes mehrschichtiges Gebilde darstellt und in der Zelle exakt gehalten sein muß, um ihre komplexe Funktion einwandfrei zu erfüllen.

Außer der Depolarisation des Luftsauerstoffs fallen ihr nämlich noch weitere Aufgaben zu. Dazu zählen die Begrenzung des Stoffaustausches überhaupt ($CO_2$Aufnahme, Wasseraustausch) mit der umgebenden Atmosphäre, die Verhinderung von Elektrolytaustritt aus dem luftzugänglichen Teil des Gehäuses, die Abdichtung gegen den Gehäusebecher bei gleichzeitigem guten elektrischen Kontakt und die Aufnahme der Schließkräfte beim Bördelvorgang.

Die Luftelektrode setzt sich im allgemeinen aus einer mit einem Netzableiter versehenen Aktivkohleschicht — der eigentlichen Depolarisatorschicht — und einer luftseitigen hydrophoben Deckschicht (gewöhnlich eine ungesinterte PTFE-Folie) zusammen. Die Aktivkohle kann ggf. mit einem Katalysator versehen sein. Auf der Luftseite ist im allgemeinen eine poröse Diffusionsschicht vorgesehen, die die Luftverteilung begünstigt.

Beim Verbördeln der mit den Zellbestandteilen fertig bestückten Gehäusehälften kommt es vor, daß die Luftkathode nicht in ebener Lage verbleibt, sondern sich durch Verschiebung oder plastische Verformung während des Bördelvorganges aufwölbt. Die daraus entehenden Folgen sind ein zu großer Stoffaustausch mit der Atmosphäre, Elektrolytaustritt durch Rißbildung der hydrophoben Deckschicht, Kontaktverlust des Netzableiters am Kathodenbecher, Ablösen der Depolarisationsmasse aus dem Netzableiter oder eine Ablösung der Deckschicht durch sich während der Entladung aufbauenden Elektrolytdruck.

Bei der aus der DE-A 24 54 890 bekannten Knopfzelle soll eine sichere und elektrolytdichte Festlegung der Luftkathode dadurch erreicht werden, daß der Rand der Kathode zwischen dem Dichtungsfuß und einer angeformten absatzförmigen Randzone des Zellenbechers festgehalten ist, und daß der Boden des Zellenbechers und die Kathode konvex nach außen gewölbt sind.

Eine Luftsauerstoffzelle der eingangs genannten Art ist der DE-A 2 043 451 zu entnehmen. Der Boden des äußeren Gehäusebechers weist eine nahe an seinem Rand umlaufende Vertiefung oder einwärts gerichtete Sicke auf, welche eine Luftkathode abstützt und zugleich als Widerlager für ein Dichtungsglied fungiert, durch welches der äußere und innere Metallbecher voneinander elektrisch isoliert sind.

Der Erfindung liegt die Aufgabe zugrunde, eine Zellenkonstruktion anzugeben, durch die eine Deformierung der Kathode während des Einbaues verhindert wird, durch die eine einwandfreie Abdichtung erreicht wird und bei der der elektrische Kontakt zwischen Kathode und Zellenbecher stets gewährleistet ist.

Diese Aufgabe wird erfindungsgemäß mit den im kennzeichnenden Teil des Anspruchs 1 angegebenen Mitteln gelöst.

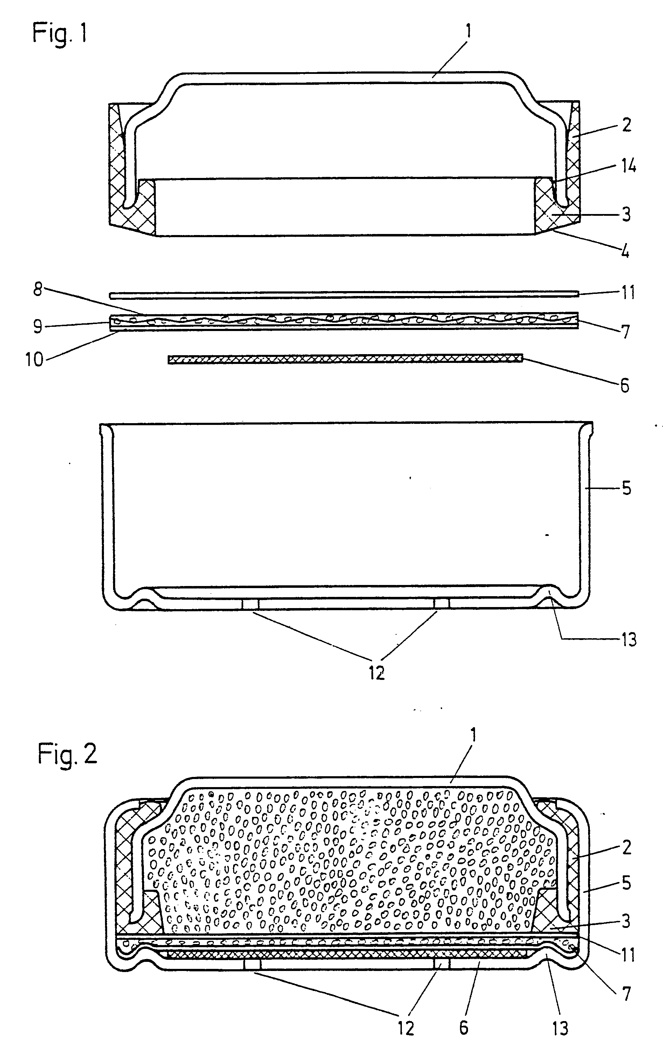

Die Erfindung wird im folgenden anhand der Figuren 1 und 2 erläutert. Figur 1 zeigt die einzelnen Bestandteile der Knopfzelle vor dem Zusammenbau. Figur 2 zeigt die fertig montierte Zelle.

Gemäß Figur 1 ist auf einen inneren Metallbecher 1 der zur Aufnahme des negativen Elektrodenmaterials, z. B. mit Kalilauge angeteigtes Zinkpulver (nicht dargestellt) dient, ein Dichtungsring 2 aus Kunststoff so aufgesteckt oder ggf. aufgespritzt, daß er mit seinem Dichtungsfuß 3 den Rand des Metallbechers 1 uförmig umschließt. Der Dichtungsfuß 3 besitzt erfindungsgemäß eine in radialer Richtung von innen nach außen ansteigende Abschrägung seiner Basis 4. Der Neigungswinkel gegen die Horizontale, vorteilhaft sind Neigungswinkel um ca. 15° , sollte erfindungsgemäß zwischen 10 und 25° liegen.

In den äußeren Metallbecher 5 werden eine Luftverteilungsschicht 6, die positive Elektrode 7, bestehend aus der vom Netzableiter 8 durchsetzten Aktivkohleschicht 9 und einer hydrophoben PTFE-Deckschicht 10, sowie der Separator 11 eingelegt. Die Versorgung der Kathode mit Luftsauerstoff wird durch die Öffnungen 12 im Boden des äußeren Metallbechers 5 ermöglicht.

Der äußere Metallbecher 5 besitzt eine aus seinem Boden ausgeformte, nach innen weisende konzentrische Sicke 13. Ihr Durchmesser sollte kleiner sein als der Durchmesser des zylindrischen Wandteiles des inneren Metallbechers 1, aber nicht kleiner als der Innendurchmesser des Dichtungsfußes 3. Die mehrschichtige positive Elektrode 7 liegt unmittelbar auf der Sicke 13 auf. Beim Einsetzen des inneren Metallbechers 2 wird die Luftelektrode 7 zuerst durch die Innenwand des Dichtungsfußes 3 gegen den äußeren Becherboden gepreßt, und damit wird ein Anwölben der Elektrode 7 nach innen beim weiteren Zusammenpressen sicher verhindert. Die Luftelektrode 7 wird dann zwischen Sicke 13 und Dichtungsfuß 3 eingepreßt und ist nach dem Bördelvorgang zwischen Dichtungsring 2, 3 und Sicke 13 zuverlässig eingespannt. Bei der Schließung im Bördelwerkzeug wird der innere U-Schenkel des Dichtungsfußes 3 an die Innenwandung des inneren Metallbechers 1 fest angepreßt, so daß der in Figur 1 erkennbare Luftspalt 14 verschwindet ; damit wird der Elektrolytkriechweg verlängert. Der auf den Separator 11 und auf die Luftkathode 7 aufgepreßte Dichtungsfuß 3 ist in seiner Wirkung mit einer Tellerfeder vergleichbar, die über einen langen Zeitraum ihren Anpreßdruck sicher aufrechterhält, auch wenn beispielsweise der Kunststoff der hydrophoben Deckschicht 10 oder die Depolarisationsschicht 9 nachgeben. Ebenso bleibt der elektrische Kontakt zwischen dem Netzableiter 8 und dem Kathodenbecher 5 zuverlässig erhalten.

**Patentansprüche**

1. Luftsauerstoffzelle in Knopfform, bestehend aus einem den Elektrolyten und das negative Elektrodenmaterial aufnehmenden inneren Metallbecher und einem eine mehrschichtige positive Luftsauerstoffelektrode enthaltenden äußeren Metallbecher, die unter Zwischenlage einer isolierenden Dichtung zusammengefügt sind, wobei aus dem Boden des äußeren Metallbechers eine nach innen weisende konzentrische Sicke ausgeformt und die mehrschichtige positive Luftsauerstoffelektrode zwischen der Sicke und einem Dichtungsfuß fest eingespannt ist, dadurch gekennzeichnet, daß der Dichtungsfuß (13) vor dem Zusammensetzen der Zelle an seiner Basis abgeschrägt ist.

2. Luftsauerstoffzelle nach Anspruch 1, dadurch gekennzeichnet, daß der Neigungswinkel der Abschrägung des Dichtungsfußes (3) gegen die Horizontale zwischen 10° und 25° liegt.

**Claims**

1. Air-depolarized cell in button form, consisting of an inner metal can, receiving the electrolyte and the negative electrode material, and an outer metal can, containing a multi-layered, positive airdepolarized electrode, the cans being joined together with an insulating seal in between, an inwardly pointing concentric bead being formed from the bottom of the outer metal can and the multi-layered, positive air-depolarized electrode being clamped firmly between the bead and a sealing foot, characterized in that the sealing foot (3) is bevelled at its base before the fitting together of the cell.

2. Air-depolarized cell according to Claim 1, characterized in that the angle of inclination of the bevel of the sealing foot (3) from the horizontal is between 10° and 25°.

**Revendications**

1. Pile à dépolarisation par l'air en forme de bouton, consistant en une coupelle métallique interne recevant l'électrolyte et le matériau d'électrode négatif et en une coupelle métallique externe contenant une électrode positive à dépolarisation par l'air multicouche qui sont assemblées avec interposition d'un joint isolant, une moulure concentrique tournée vers l'intérieur étant formée à partir du fond de la coupelle métallique externe et l'électrode positive à dépolarisation par l'air multicouche étant enserrée fermement entre la moulure et un pied de joint, caractérisée en ce que le pied de joint (13) est biseauté à sa base avant l'assemblage de la pile.

2. Pile à dépolarisation par l'air selon la revendication 1, caractérisée en ce que l'angle d'inclinaison par rapport à l'horizontale du biseau du pied de joint (3) est compris entre 10 et 25°.

Fig. 1

Fig. 2

1